# EUROPÄISCHE PATENTSCHRIFT

(11) **EP 1 100 667 B1**
(45) Veröffentlichungstag und Bekanntmachung des Hinweises auf die Patenterteilung: **15.10.2003**
(21) Anmeldenummer: 99940040.1
(22) Anmeldetag: 23.07.1999
(51) Int. Cl.: B29C 44/58, B29C 45/14, B29C 70/76, B29C 33/12

(54) **ZENTRIEREINRICHTUNG FÜR FLACHE BAUTEILE, INSBESONDERE GLASTAFELN**
CENTERING DEVICE FOR FLAT COMPONENTS, ESPECIALLY GLASS PANELS
DISPOSITIF DE CENTRAGE DESTINE A DES COMPOSANTS PLATS, NOTAMMENT DES PANS DE VERRE

(30) Priorität: 25.07.1998 DE 29813174 U
(43) Veröffentlichungstag der Anmeldung: 23.05.2001
(73) Patentinhaber: FA. Oskar Braunsberger, 87719 Mindelheim (DE)
(72) Erfinder: HAGENMEYER, Cord, D-87719 Mindelheim (DE); WEISS, Oliver, D-87719 Mindelheim (DE); HOYER, Alois, D-87719 Mindelheim (DE)
(74) Vertreter: Fiener, Josef
(86) Internationale Anmeldenummer: EP9905287
(87) Internationale Veröffentlichungsnummer: WO00006361

(56) Entgegenhaltungen:
- EP-A- 0 401 091
- DE-A- 3 227 014
- US-A- 2 559 861
- PATENT ABSTRACTS OF JAPAN vol. 012, no. 428 (M-762), 11. November 1988 (1988-11-11) -& JP 63 162210 A (HASHIMOTO FORMING CO LTD), 5. Juli 1988 (1988-07-05)
- PATENT ABSTRACTS OF JAPAN vol. 012, no. 466 (M-772), 7. Dezember 1988 (1988-12-07) & JP 63 191610 A (NISSAN MOTOR CO LTD), 9. August 1988 (1988-08-09)
- PATENT ABSTRACTS OF JAPAN vol. 016, no. 278 (M-1268), 22. Juni 1992 (1992-06-22) & JP 04 069222 A (AISIN SEIKI CO LTD), 4. März 1992 (1992-03-04)

## Beschreibung

Die Erfindung betrifft eine Zentriereinrichtung für flache Bauteile, insbesondere Glastafeln, die zumindest an den Seitenkanten mit einem Kunststoff-Rahmen umspritzbar/umschäumbar oder umkapselbar sind.

Eine derartige Zentriervorrichtung ist aus der US-A-2 559 861 bekannt, wobei zur Zentrierung einen Linse Federn mit unterschiedlichen Federkonstanten verwendet werden, die an den Hauptflächen der Linse angreifen.

Derartige Bauteile in Form von Glastafeln für Schiebedächer, Heck-, Front- oder Seitenscheiben oder ähnliche Bauteile werden in Kraftfahrzeugen zunehmend eingesetzt. Dabei ist die Glastafel innerhalb der Dach- oder Fensteröffnung so groß wie möglich gewählt, so daß der die Glastafel umgebende Kunststoff-Rahmen aus einem thermoplastischen Kunststoff oder Polyurethanschaum so schmal wie möglich sein sollte. Dieser Kunststoff-Rahmen des Glasschiebedaches dient dabei auch zur Befestigung von Halterungsteilen, beispielsweise Laschen, an denen der Antriebsmechanismus für die Öffnung des Glasschiebedaches angelenkt sind, insbesondere wenn das Glasschiebedach auch als Hebe- oder Aufstelldach oder als Heck-, Front- oder Seitenscheiben mit Befestigungsteilen verwendet wird. Solche Bauteile werden in derJP-A-63/162 210 und der JP-A-63/191 610 gezeigt, wobei Glasbruch vermieden werden soll.

Der Befestigung des Kunststoff-Rahmens an der Glastafel zusammen mit den Halterungsteilen kommt hierbei eine wesentliche Bedeutung zu, da die Glastafel des Glasschiebedaches aus aerodynamischen Gründen bündig mit der Dachfläche sein soll. Somit ist der Kunststoff-Rahmen im wesentlichen nur an der Umlaufkante und einem schmalen Bereich an der Unterseite des Glasschiebedaches vorgesehen. Zudem hat der Kunststoff-Rahmen auch noch die Funktion zur Halterung einer umlaufenden Dichtung, um hier eine zuverlässige Abdichtung zu gewährleisten.

Zur Abdichtung ist zudem im allgemeinen an dem Kunststoff-Rahmen auch eine umlaufende Nut vorgesehen. Jedoch erfordert gerade diese Ausbildung ein sehr genaues Schäum- oder Umspritzwerkzeug, da der Abstand zwischen dem Nutgrund und dem Glastafelumriß an den vier umlaufenden Seitenkanten des Glasschiebedaches wegen der angestrebten schmalen Bauweise des Rahmens nur wenige Millimeter betragen kann, so daß bei der Herstellung eine sehr präzise Positionierung der Bauteils, insbesondere der Glastafel innerhalb des Werkzeuges erforderlich ist. Die zur Fertigung erforderliche Zentrierungeinrichtung soll zudem auch den Schaumlauf des Kunststoffes beim Umspritz- bzw. Umschäumvorgang nicht stören, damit die Kontaktflächen nicht überdimensioniert werden müssen.

Weiterhin ist bei dem bisherigen Herstellungsverfahren mit einem üblichen manuellen Zentrieren im Umschäumwerkzeug der Nachteil einer hohen Taktzeit und einer hohen Unfallgefahr gegeben. Zudem ist die Maßgenauigkeit auch bei Verwendung von mechanisch gekoppelten Anschlägen durch die Vielzahl der Werkzeugteile oft unzureichend, insbesondere wenn sich in dem Werkzeug und den Wärmeanfall bei der Fertigung Längungen und somit gewisse Maßungenauigkeiten ergeben können. Dadurch können an den Kanten des Kunststoff-Rahmens Grate auftreten, die wiederum ein hohes Maß an Nacharbeit erfordern.

Demzufolge liegt der Erfindung die Aufgabe zugrunde, eine einfach aufgebaute Zentriereinrichtung für flache Bauteile, insbesondere für eine Glastafel zu schaffen, die die vorstehenden Nachteile vermeidet, insbesondere die Werkzeugkosten reduziert, sowie eine höhere Maßgenauigkeit mit verringerten Nachbearbeitungsaufwand bietet.

Diese Aufgabe wird gelöst durch eine Zentriereinrichtung gemäß den Merkmalen des Anspruches 1.

Durch die vorgeschlagene Zentriereinrichtung kann der Kunststoff-Rahmen für das Umspritzen/Umschäumen in einfacher, exakt zentrierter Weise hergestellt werden. Insbesondere kann hierbei auf aufwendige Getriebe oder Koppelungen an dem Werkzeug bzw. für die Zentriereinrichtung verzichtet werden. Somit ist die Zentriereinrichtung im wesentlichen in das Schäumwerkzeug integriert und sehr einfach aufgebaut. Zudem wird hierdurch ein sehr gleichmäßiger Schaumlauf erreicht, so daß eine vollständige Benetzung der Glastafel an den Rändern erreicht wird. Zudem wird die Festigkeit zwischen Glastafel und dem Kunststoff-Rahmen in reproduzierbarer Form erhöht, so daß die Qualität des Fertigbauteils insgesamt steigt.

Insbesondere wird auch sichergestellt, daß die Außenkonturen des Bauteils, insbesondere eines Glasschiebedaches exakt eingehalten werden. Hierdurch wird der Aufwand für eine Nachbearbeitung der Außenkontur oder eine Entgratung der Außenkanten erheblich reduziert. Insbesondere wird auch durch die Zentrierung der paarweise angeordneten Federn bei einfachster Bauweise eine exakte Relativ-Zuordnung erreicht, so daß bei einem bevorzugten Anwendungsbeispiel eines Glas-Schiebedachs eine gleichmäßige Dichtungsanlage und somit insgesamt eine bessere Abdichtung der Dachöffnung erreicht wird. Weitere vorteilhafte Ausgestaltungen sind Gegenstand der Unteransprüche.

Nachfolgend wird ein Ausführungsbeispiel der Erfindung anhand der Zeichnungen näher erläutert und beschrieben. Hierin zeigen:
- Fig. 1: eine Übersichtsdarstellung eines Schiebedaches für Kraftfahrzeuge mit einer Glastafel als Beispiel eines flachen, in ein Schäumwerkzeug einzulegenden Bauteils;
- Fig. 2: das Glasschiebedach gemäß Fig. 1 bei der Herstellung im Schäumwerkzeug; und
- Fig. 3: eine schematische Darstellung einer Zentriereinrichtung.

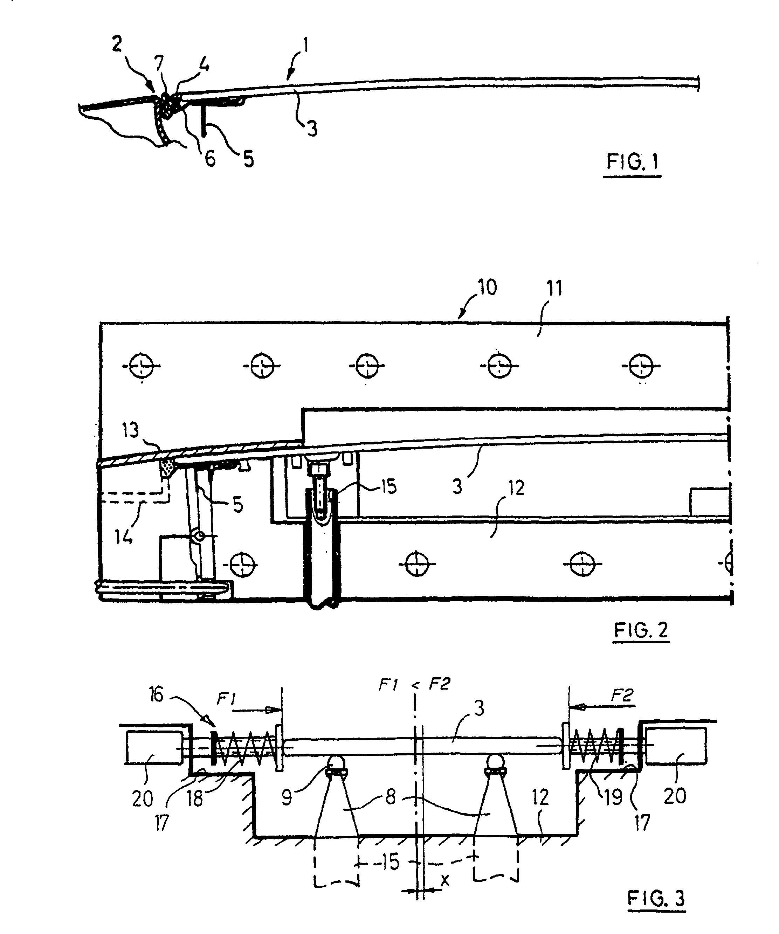

In Fig. 1 ist ein Glasschiebedach 1 als Anwendungsbeispiel zum Einbau in einer Dachöffnung 2 eines Kraftfahrzeuges dargestellt. Das Glasschiebedach 1 umfaßt im wesentlichen eine Glastafel (hier als repräsentatives Beispiel eines flachen Bauteils 3), die am Außenrand bzw. den Seitenkanten von einem Kunststoff-Rahmen 4 bevorzugt aus PU-Schaumstoff umgeben ist. Dieser Rahmen 4 wird in einem Schäumwerkzeug (vgl. Fig. 2) an dem Außenrand der Glastafel 3 umspritzt bzw. umschäumt. Hierbei werden auch Halterungsteile 5, bevorzugt Winkelbleche mitumspritzt, so daß zum einen die Verwindungsteifigkeit erhöht wird und zum anderen eine Befestigung an dem Antriebsmechanismus zum Schieben bzw. Heben des Glasschiebedaches 1 ermöglicht wird. An den nach außen weisenden Seitenkanten des Kunststoff-Rahmens 4 ist in der Ebene der Glastafel 3 eine umlaufende, bevorzugt T-förmige Nut 6 zum Einsetzen einer Dichtung 7 vorgesehen.

In Fig. 2 ist das entsprechende Schäumwerkzeug 10 bestehend aus einem Werkzeugoberteil 11 und einem Werkzeugunterteil 12 schematisch dargestellt. Das Schäumwerkzeug 10 kann jedoch auch um 180° ("Überkopf") gedreht werden, so daß die Glastafel 3 dann konkav positioniert wäre. Wie hieraus ersichtlich ist, ist der Formhohlraum am Außenumfang der Glastafel 3 zur Ausbildung des Rahmens 4 hier punktiert dargestellt und strömungsgünstig geformt, so daß eine sichere Formfüllung erreicht wird. Dies ist besonders wesentlich, da die Glastafel 3 und die Halterungsteile 5 bei diesem Ausführungsbeispiel nur durch die Kontaktfläche zum Rahmen 4 hin befestigt sind. Der hier punktiert dargestellte Formhohlraum zur Ausbildung des Rahmens 4 ist dabei günstig abzudichten, bevorzugt mit einer selbsttrennenden Dichtungsplatte 13, die einen Austritt des über eine oder bevorzugt mehrere Einspritzöffnung(-en) 14 eintretenden Kunststoffschaumes an die Oberseite der Glastafel 3 zuverlässig verhindert. Durch diese Dichtungsplatte 13 wird die Oberseite der Glastafel 3 beim Schäumvorgang sauber gehalten, so daß praktisch keine Nacharbeit erforderlich ist.

Zudem ist ersichtlich, daß auch eine sichere Abdichtung zu weiter innen vorgesehenen Auswerfern 15 möglich ist, wodurch somit eine sichere Füllung des Formhohlraums mit Umspritzung der Halterungsteile 5 sichergestellt ist. Weiterhin ist ersichtlich, daß sich das Werkzeugoberteil 11 mit der Dichtungsplatte 13 im wesentlichen kontinuierlich nach außen erstreckt, so daß bei einem gleichbleibenden Werkzeugoberteil 11 verschiedenartige Werkzeugunterteile 12 verwendet werden können. Hierdurch ist beispielsweise auf einer Produktionsanlage mit dem jeweils gleichen stempelartigen Werkzeugoberteil 11 eine Fertigung unterschiedlicher Varianten der Glasschiebedächer 1 mit verschieden positionierten Halterungsteilen 5 möglich. Zudem genügt zur Entnahme des fertiggestellten Glasschiebedaches mit dem Rahmen 4 ein einfaches Anheben des Werkzeugoberteils 11 bzw. ein Absenken des Werkzeugunterteils 12, so daß hierdurch die Taktzeit wesentlich verringert wird.

In Fig. 3 ist die Zentriereinrichtung 16 mit den paarweise gegenüberliegenden Federn 18 und 19 dargestellt, die hier jeweils in seitlichen Vertiefungen 17 des Werkzeugunterteil 12 eingesetzt sind. Diese Druck-Federn 18 und 19 sind im wesentlichen in der Ebene des flachen Bauteils 3 ausgerichtet und weisen eine identische Federkonstante auf. Die Federn 18 und 19 liegen somit bei positionierter Glastafel 3 mit gleicher Federkraft F1 bzw. F2 an den Seitenkanten des Bauteils bzw. der Glastafel 3 an, wodurch sich aufgrund des Federspiels eine automatische Zentrierung ergibt. Dies gilt auch für Bauteile mit unterschiedlicher Grundfläche bzw. Breite, so daß die Zentriereinrichtung für unterschiedlich breite Glastafeln 3 nutzbar ist. Dadurch können auch geringe Maßabweichungen ausgeglichen werden.

Es sei jedoch darauf hingewiesen, daß als Zentrierelement bzw. Feder 18/19 auch ein Gasfederelement oder ein sonstiger Arbeitsspeicher verwendet werden kann, wobei diese zu den Kanten in etwa parallel zur Hauptebene der Glastafel 3 ausgerichtet sind. Die Glastafel 3 ist somit zwischen den mit gleichen Kräften wirkenden Federn 18/19 zentriert aufgenommen, wobei das eingelegte Bauteil 3 auf einer Auflagevorrichtung 8 abgestützt ist, die hier mit kugelförmigen Auflageelementen 9 ausgestattet ist. Hierdurch ergibt sich eine reibungsarme Mehrpunktauflage, wobei die Auflagevorrichtung 8 zugleich und/oder teilweise auch als Auswerfer 15 ausgebildet sein kann, wie dies strichliert dargestellt ist.

Wenn jedoch das Bauteil 3 bzw. die Glastafel außermittig zwischen die Federn 18 und 19 eingelegt wird, wie dies durch das Maß "x" zwischen der strichpunktierten Werkzeugmittellinie und der dünn gezeichneten Bauteilmittellinie angedeutet ist, ergibt sich eine größere Kraft F2 an der Feder 19, bis durch Verschiebung des Bauteils 3 um das Maß "x" wiederum das Kräftegleichgewicht F1 = F2 und damit Übereinstimmung der Mittellinien herrscht. Selbstverständlich kann zur Schaffung dieser Relativ-Zuordnung im Werkzeug 10 auch eine zweite, um ca. 90° versetzt angeordnete Zentriereinrichtung 16 an dem anderen Seitenkantenpaar vorgesehen sein. Zur wechselweisen Betätigung der Zentrierelemente 18/19 an den Längs- und Querseitenkanten eines Bauteils 3 kann dabei eine gesonderte, schematisch dargestellte Rückziehvorrichtung mit Spannelementen 20 vorgesehen sein, die sich kolbenartig zu den Federn 18 und 19 hinerstrecken.

Das jeweilige Spannelement 20 zum Rückziehen der Federn 18/19, insbesondere nach dem Einlegen bzw. Absenken des Bauteils 3 in das Formnest des Werkzeugunterteils 12, kann dabei durch Druckluft- oder Hydraulikzylinder oder Schraubspindeln gebildet sein. Nach Freigabe der Spannelemente 20 ergibt sich durch das Federspiel automatisch wieder die zentrierende Relativ-Zuordnung durch die Beaufschlagung mittels der paarweise gegenüberliegenden Federn 18/19 mit gleicher Federkonstante. Hierdurch lassen sich auch geringfügige Toleranzen bei der Fertigung der Bauteile/Glastafeln 3 gut ausgleichen, so daß insgesamt eine exakte Zuordnung zwischen allen Bauteilen geschaffen wird. Hierdurch wird beim bevorzugten Ausführungsbeispiel eines Glas-Schiebedaches 1 insgesamt die Positionierung des Rahmens 4 und damit die Abdichtung beim Einbau in das Kraftfahrzeug gegenüber der Dachöffnung 2 (vgl. Fig. 1) verbessert. Jedoch kann die Zentriereinrichtung 16 auch zur großflächigen Umschäumung bzw. Umkapselung von Bauteilen für jegliche Kunststoff-Verbundelemente eingesetzt werden.

## Patentansprüche

1. Zentriereinrichtung für flache Bauteile (3), insbesondere Glastafeln, die zumindest an den Seitenkanten mit einem Kunststoff-Rahmen (4) umspritzbar/umschäumbar oder umkapselbar sind,
**dadurch gekennzeichnet, daß**
die Zentriereinrichtung (16) durch Federn (18 und 19) mit gleicher Federkonstante gebildet ist, die einander gegenüberliegend am Rand des Bauteils (3) angreifend angeordnet sind.

2. Zentriereinrichtung nach Anspruch 1,
**dadurch gekennzeichnet, daß**
die Federn (18 und 19) jeweils an Längs- und Seitenkanten des Bauteils (3) paarweise angeordnet sind.

3. Zentriereinrichtung nach Anspruch 1 oder 2,
**dadurch gekennzeichnet, daß**
das Bauteil (3), insbesondere eine Glastafel auf einer absenkbaren Auflagevorrichtung (8) abgestützt ist.

4. Zentriereinrichtung nach Anspruch 3,
**dadurch gekennzeichnet, daß**
die Auflagevorrichtung (8) an ihrer Oberseite bewegliche Auflageelemente (9) aufweist.

5. Zentriereinrichtung nach Anspruch 4,
**dadurch gekennzeichnet, daß**
die Auflageelemente (9) durch Wälzelemente, insbesondere Kugeln gebildet sind.

6. Zentriereinrichtung nach einem der Ansprüche 3 bis 5,
**dadurch gekennzeichnet, daß**
die Auflagevorrichtung (8) an der Oberseite von Auswerfern (15) ausgebildet ist.

7. Zentriereinrichtung nach einem der Ansprüche 1 bis 6,
**dadurch gekennzeichnet, daß**
die Zentriereinrichtung (16) im Werkzeugunterteil (12) oder Werkzeugoberteil (11) eines Schäumwerkzeuges (10),
insbesondere in Vertiefungen (17) angeordnet ist.

8. Zentriereinrichtung nach einem der Ansprüche 1 bis 7,
**dadurch gekennzeichnet, daß**
die Zentriereinrichtung (16) in Bereich der Trennebene eines Schäumwerkzeuges (10) vorgesehen ist.

9. Zentriereinrichtung nach einem der Ansprüche 1 bis 8,
**dadurch gekennzeichnet, daß**
die Federn (18 und 19) jeweils von einem Spannelement (20) vorspann- bzw. zurückziehbar sind.

10. Zentriereinrichtung nach Anspruch 9,
**dadurch gekennzeichnet, daß**
das Spannelement (20) jeweils durch eine Schraubspindel oder einen Fluidzylinder gebildet ist.

## Claims

1. A centering device for flat components (3), especially glass panels, which can be surrounded at least along their lateral edges by a synthetic frame (4) by injection/foaming or encapsulation,
**characterised in that**
the centering device (16) is formed by springs (18 and 19) having the same elastic constant, which are positioned opposite each other and both engage the edge of the component (3).

2. Centering device as claimed in Claim 1, **characterised in that** the springs (18 and 19) are arranged in pairs respectively along the longitudinal and lateral edges of the component (3).

3. Centering device as claimed in Claim 1 or 2, **characterised in that** the component (3), in particular a glass panel, is supported on a bearing device (8) which can be lowered.

4. Centering device as claimed in Claim 3, **characterised in that** the bearing device (8) exhibits on its upper side movable bearing elements (9).

5. Centering device as claimed in Claim 4, **characterised in that** the bearing elements (9) are formed by roller elements, in particular spheres.

6. Centering device as claimed in any one of Claims 3 to 5, **characterised in that** the bearing device (8) is formed on the upper side by ejectors (15).

7. Centering device as claimed in any one of Claims 1 to 6, **characterised in that** the centering device (16) is arranged in the tool lower section (12) or tool upper section (11) of a foaming tool (10), in particular in recesses (17).

8. Centering device as claimed in any one of Claims 1 to 7, **characterised in that** the centering device (16) is provided with a foaming tool (10) in the vicinity of the separating plane.

9. Centering device as claimed in any one of Claims 1 to 8, **characterised in that** the springs (18 and 19) can each be pre-tensed or retracted by a tension element (20).

10. Centering device as claimed in Claim 9, **characterised in that** the tension element (20) is formed by a screwjack assembly or a fluid cylinder.

## Revendications

1. Dispositif de centrage destiné à des composants plats (3), notamment des pans de verre qui, au moins sur leurs arêtes latérales, peuvent être entourés par extrusion/moussage ou encapsulage par un cadre en matière plastique (4), **caractérisé en ce que** le dispositif de centrage (16) est constitué de ressorts (18 et 19) avec une constante élastique identique, agencés en prise au bord du composant (3) et disposés l'un en face de l'autre ou mutuellement opposés.

2. Dispositif de centrage selon la revendication 1, **caractérisé en ce que** les ressorts (18 et 19) sont disposés respectivement par paires sur les arêtes latérales et longitudinales du composant (3).

3. Dispositif de centrage selon la revendication 1 ou 2, **caractérisé en ce que** le composant (3), notamment un pan de verre, prend appui sur un dispositif de support (8) abaissable.

4. Dispositif de centrage selon la revendication 3, **caractérisé en ce que** le dispositif de support (8) présente, sur sa partie supérieure, des éléments de support mobiles (9).

5. Dispositif de centrage selon la revendication 4, **caractérisé en ce que** les éléments de support (9) sont constitués d'éléments de laminage ou de roulement, notamment des sphères.

6. Dispositif de centrage selon l'une des revendications 3 à 5, **caractérisé en ce que** le dispositif de support (8) est formé sur la partie supérieure d'éjecteurs (15).

7. Dispositif de centrage selon l'une des revendications 1 à 6, **caractérisé en ce que** le dispositif de centrage (16) est disposé dans la partie inférieure (12) ou dans la partie supérieure (11) d'un outil de moussage (10), notamment dans des renfoncements (17).

8. Dispositif de centrage selon l'une des revendications 1 à 7, **caractérisé en ce que** le dispositif de centrage (16) est prévu dans la zone du plan de séparation d'un outil de moussage (10).

9. Dispositif de centrage selon l'une des revendications 1 à 8, **caractérisé en ce que** les ressorts (18 et 19) sont respectivement précontraints ou rétractibles à partir d'un élément tenseur (20).

10. Dispositif de centrage selon la revendication 9, **caractérisé en ce que** l'élément tenseur est constitué respectivement d'une tige filetée ou d'un cylindre hydraulique.
